(19) Europäisches Patentamt
European Patent Office
Office européen des brevets

(11) Publication number: **0 294 861**
**A1**

(12) **EUROPEAN PATENT APPLICATION**

(21) Application number: **88200910.3**

(22) Date of filing: **09.05.88**

(51) Int. Cl.⁴: **C08K 9/04 , C08L 69/00 , C08L 67/02**

(30) Priority: **12.06.87 NL 8701368**

(43) Date of publication of application: **14.12.88 Bulletin 88/50**

(84) Designated Contracting States: **DE FR GB IT NL**

(71) Applicant: **GENERAL ELECTRIC COMPANY**
**1 River Road**
**Schenectady New York 12151(US)**

(72) Inventor: **Verhoeven, Jeroen Johannes**
**General Electric Plastics B.V. P.O. Box 117**
**NL-4600 AC Bergen op Zoom(NL)**
Inventor: **Roovers, Wilhelmus Marinus Maria**
**General Electric Plastics B.V. P.O. Box 117**
**NL-4600 AC Bergen op Zoom(NL)**

(74) Representative: **Schüler, Horst, Dr. et al**
**General Electric Praunheimer Landstrasse 50**
**D-6000 Frankfurt 90(DE)**

(54) **Polymer mixture having an aromatic polycarbonate, an aromatic polyester and a pigment.**

(57) The invention relates to polymer mixtures which comprise an aromatic polycarbonate, an aromatic polyester and a pigment. The pigment used has been pre-treated with a solution of an agent which is capable of forming a complex or chelate with metal ions.

EP 0 294 861 A1

**Polymer mixture having an aromatic polycarbonate, an aromatic polyester and a pigment.**

The invention relates to a polymer mixture which comprises the following constituents:

A. 1-98.9% by weight of an aromatic polycarbonate,

B. 98.9-1% by weight of an aromatic polyester, and

C. 0.1-8% by weight of a pigment.

Polymer mixtures which comprise an aromatic polycarbonate and an aromatic polyester are generally known. It is also known, for example, from GB-A-1466154, that such mixtures have a certain instability. A transesterification reaction probably occurs in such mixtures.

Even if the polymer mixtures comprise a conventionally used phosphorus-containing stabiliser, the known polymer mixtures are insufficiently stable in the presence of pigments, for example, ultramarine blue.

The invention is based on the discovery that no or at least a much smaller instability occurs when a pre-treated pigment, for example, ultramarine blue, is used.

The polymer mixture according to the invention is characterised in that it comprises as a pigment a pigment which is pre-treated with a solution of an agent which is capable of forming a complex or chelate with metal ions.

The invention also relates to a pigment treated in the manner as indicated hereinbefore and to articles formed from the polymer mixture according to the invention.

The polymer mixture according to the invention preferably comprises an ultramarine blue pigment. Even more preferably it comprises an ultramarine blue pigment which is pre-treated with an aqueous solution of ethylenediaminotetracetic acid or a salt thereof.

The polymer mixture according to the invention may moreover comprise a stabiliser and an agent to improve the impact strength. In addition, the polymer mixture according to the invention may comprise one or more conventional additives. All this will be described in greater detail hereinafter.

The polymer mixture according to the invention comprises at any rate the following constituents in the quantities indicated hereinbefore:

A. aromatic polycarbonate,

B. aromatic polyester,

C. a pre-treated pigment.

The polymer mixture according to the invention may moreover comprise one or more of the following constituents:

D. one or more agents to improve the impact strength, and

E. conventional additives, among which stabilisers.

<u>A. Aromatic polycarbonate</u>

Aromatic polycarbonates are materials known <u>per se</u>. They are generally prepared by reacting a dihydric phenol compound with a carbonate precursor, for example, phosgene, a halogen formiate or a carbonate ester. Aromatic polycarbonates are polymers which comprise units of the formula:

$$-\!\!\left( O - A - O - \overset{\overset{\displaystyle O}{\|}}{C} \right)\!\!-$$

wherein A is a bivalent aromatic radical derived from the dihydric phenol which is used in the preparation of the polymer. As dihydric phenols may be used in the preparation of the aromatic polycarbonates mononuclear or polynuclear aromatic compounds which comprise two hydroxy radicals which are each directly bonded to a carbon atom of an aromatic nucleus.

Examples of suitable dihydric phenols are:

2,2-bis-(4-hydroxyphenyl)propane; hydroquinone, resorcinol; 2,2-bis-(4-hydroxyphenyl)pentane; 2,4′-(dihydroxydiphenyl)methane; bis(2-hydroxyphenyl)methane; bis-(4-hydroxyphenyl)methane; bis-(4-hydroxy-5-nitrophenyl)methane; 1,1-bis(4-hydroxyphenyl)ethane; 3,3-bis(4-hydroxyphenyl)pentane; 2,2-dihydroxyphenyl; 2,6-dihydroxynaphthalene; bis-(4-hydroxydiphenyl)sulphone; bis-(3,5-diethyl-4-hydroxyphenyl)-

sulphone; 2,2-bis-(3,5-dimethyl-4-hydroxyphenyl)propane; 2,4′-dihydroxyphenyl sulphone; 5′-chloro-2,4′-dihydroxy-diphenyl sulphone; bis-(4-hydroxyphenyl)diphenyl sulphone; 4,4′-dihydroxydiphenyl ether; 4,4′-dihydroxy-3,3/-dichlorodiphenyl ether; 4,4′-dihydroxy-2,5-dihy-droxydiphenyl ether.

Other likewise suitable dihydric phenols are disclosed in US-A-2,999,835; 3,038,365; 3,334,154 and 4,131,575.

The aromatic polycarbonates may be prepared according to methods known per se: for example, by reacting a dihydric phenol with a carbonate precursor, for example, phosgene. For this purpose reference may be made to the United States Patent Specifications mentioned hereinbefore and to US-A-4,018,750 and 4,123,426. They may also be prepared by a transesterification as described in US-A-3,153,008.

The branched polycarbonates known per se as described, for example, in US-A-4,001,184 are also suitable.

Suitable aromatic polycarbonates are also the so-called polyester carbonates which are obtained by carrying out the polymerisation reaction in the presence of an ester precursor, for example, a difunctional carboxylic acid, for example, terephthalic acid or an ester-forming derivative thereof. These polyester carbonates have ester compounds and carbonate compounds in the polymeric chain. Polyester carbonates are disclosed, for example, in US-A-3,169,121.

It is also possible in the polymer mixtures according to the invention to use a mixture of various polycarbonates as mentioned hereinbefore as an aromatic polycarbonate.

## B. Aromatic polyester

Any aromatic polyester known per se may be used in the polymer mixtures according to the invention. The polyalkyleneterephthalates are particularly suitable polyesters.

Polyalkylene terephthalates are compounds known per se. They may also be described as glycol esters of terephthalic acid. They may be prepared, for example, by alcoholysis of esters of terephthalic acid with a glycol succeeded by a polymerisation reaction, by heating glycol compounds with free acids or derivatives thereof. The glycol part of the polyalkyleneterephthalates may comprise from 2-10 carbon atoms; preferably it comprises from 2-4 carbon atoms, in the form of linear alkylene chains.

Polyesters are preferably used derived from ethylene glycol or butane-1,4-diol and terephthalic acid. It is also possible to use copolyesters in which a part of the said glycol and/or of the terephthalic acid is replaced by another glycol and/or aromatic carboxylic acid. In general, not more than 30 mol.%, preferably not more than 10 mol.%, of the glycol and/or terephthalic acid are replaced by other comonomers in such copolyesters.

It is also possible to use so-called block copolyesters as a polyalkyleneterephthalate. These block copolyesters are prepared, for example, by converting a polybutyleneterephthalate with reactive terminal groups with a reactive polyester or copolyester in the presence of a transesterification catalyst.

It is further possible to incorporate a branching agent, for example, a glycol having three or more hydroxyl groups or a trifunctional or multifunctional carboxylic acid in the polyalkylene terephthalate.

It is also possible to use a mixture of various polyesters as the polyester.

## C. Pre-treated pigment

The polymer mixture according to the invention comprises a pigment which has been pre-treated with a solution of an agent capable of forming a complex or chelate with metal ions. Such agents are generally known. Examples of such agents are ethylene diaminotetracetic acid (EDTA) and salts thereof, polyphosphates, crown ethers.

In the pre-treatment the pigment is washed with a solution of the agent. The conditions must then be chosen to be so that the content of metal ions in the pigment after the treatment is as low as possible. Suitable pigments are, for example, ultramarine blue and titanium dioxide.

## D. Agents to improve the impact strength

The polymer mixtures according to the invention preferably comprises one or more agents to improve the impact strength. Any known agent to improve the impact strength of polymer mixtures which comprise an aromatic polycarbonate and a polyalkylene terephthalate may be used in the polymer mixture according

to the invention.

The agent to improve the impact strength is generally used in a quantity from 5 to 30, preferably 5 to 15% by weight calculated with respect to the overall quantity of aromatic polycarbonate, polyalkylene terephthalate and agent to improve the impact strength.

As an agent to improve the impact strength is preferably used in the polymer mixture according to the invention a core-shell polymer which has been prepared in several steps and consists of a rubber-like core on which one or more shells have been grafted. The rubber-like core may be built up from rubber-like polyacrylates, preferably, however, the core is built up from rubber-like polydienes, for example, polybutadiene. The rubber-like core may comprise comonomers, for example, styrenes, acrylonitrile. The rubber-like core is preferably built up for more than 50 mol.% from units derived from butadiene. One or more shells have been grafted on the rubber-like core. The shell preferably consists for more than 50 mol.% of units derived from C1-6 alkylmethacrylates, for example, methyl methacrylate. The shell may also comprise comonomers, for example, acrylonitrile and styrene.

E. Conventional additives

The polymer mixture according to the invention may comprise as additives, for example, polyolefins, mould-release agents, agents to improve the flame-retarding properties, stabilisers, dyes, fillers and reinforcing fillers, for example, glass fibres.

More in particular, the polymer mixture according to the invention may also comprise a combination of several of the various additives mentioned hereinbefore.

The polymer mixture according to the invention preferably also comprises a stabiliser. Suitable stabilisers are the phosphorus-containing stabilisers known per se. By the addition of elementary sulphur, the activity of the phosphorus-containing catalyst can be further improved. Sulphurous stabilisers, for example, metal sulphate, sulphuric acid, sulphurous acid, metal sulphite, metal bisulphite, metal hydrogen sulphate or a metal thiosulphate are also suitable.

The polymer mixture according to the invention preferably comprises a weight ratio of the quantity of polycarbonate (A) to aromatic polyester (B) between 8:1 and 1:8.

The polymer mixture according to the invention can be obtained according to conventional methods of preparing polymer mixtures, for example, by melt extrusion.

The invention will be described in greater detail with reference to the ensuing specific examples:

Comparative examples A, B, C and D and examples I and II

Six polymer mixtures were prepared having a composition as indicated in Table I hereinafter. The constituents used were the following:

PBT-1 : Polybutylene terephthalate having an intrinsic viscosity of 1.18 parts/g, measured in a 60/40 mixture of phenol and 1,1,2,2,-tetrachloroethane at 25 °C.

PBT-2 : Polybutylene terephthalate having an intrinsic viscosity of 0.86 parts/g.

PC-1 : Polycarbonate derived from bisphenol A and phosgene, having an intrinsic viscosity of 0.53 parts/g, measured in methylene chloride ($CH_2Cl_2$) at 25 °C.

PC-2 : Polycarbonate having an intrinsic viscosity of 0.49 parts/g.

IM : agent to improve the impact strength - a core-shell type graft polymer having a rubber-like core, mainly built up from butadiene units on which alkylmethacrylates and a few comonomers have been grafted.

Proc.aid: an agent to improve the processing properties of the polymer mixture (processing aid).

FOS : Phosphite, namely a mixture of various aromatic and aliphatic phosphites.

$TiO_2$ : Titanium dioxide pigment.

Ultramarine blue 1: a non-pre-treated pigment blue 29

Ultramarine blue 2: a pigment blue 29 washed with hydrochloric acid.

Ultramarine blue 3: a pigment blue 29 washed with the sodium salt of ethylenediaminotetracetic acid.

The ultramarine blue 3 had been washed as follows. 200 g of the pigment were dispersed in 1,000 ml of distilled water while stirring at 50 °C. The dispersion was acidified to a pH-value of 1 with 200 ml of hydrochloric acid 0.1 N. Stirring was carried out at 50 °C for 5 minutes. The pH-value was then adjusted at 10 by means of a diluted sodium hydroxide solution. The resulting dispersion was then stirred with 640 ml of a 0.25 molar Na-EDTA solution (Na-EDTA = disodium salt of ethylenediaminotetracetic acid) at 50 °C for

20 minutes. The dispersion was filtered. The filtrate was washed (once with 500 ml of 0.1 N HCl; two times with 200 ml of distilled water). The pigment was finally dried in a circulation furnace at 110° C for 4 hours.

The ultramarine blue 2 was treated in the same manner in which, however, the treatment with Na-EDTA was omitted.

The indicated constituents were extruded collectively on a double-blade extruder at a melting temperature of approximately 280° C and a speed of 200 rpm.

The stability against transesterification was determined as follows. Test pieces for determining the Vicat-B value according to DIN 53460 under extra heavy conditions (285° C, 6 minutes) were injection-moulded from the polymer mixtures according to all the examples. In a transesterification reaction products are formed which lead to a reduction of the Vicat value. A lower Vicat value thus indicates a transesterification: the higher the Vicat, the stabler is the polymer mixture.

The resulting test pieces were also evaluated visually with regard to surface defects (so-called "Splay"). Such surface defects often occur as a result of transesterification reactions.

The results found are recorded in Table I.

TABLE I

| Example | A | B | C | D | E | F | G | I | II |
|---|---|---|---|---|---|---|---|---|---|
| Composition (parts by weight) | | | | | | | | | |
| o PBT-1 | 37 | - | 37 | - | 37 | - | - | 37 | - |
| o PBT-2 | - | 37 | - | 37 | - | 37 | 37 | - | 37 |
| o PC-1 | 53 | - | 51.75 | - | 48.25 | - | - | 48.25 | - |
| o PC-2 | - | 53 | - | 51.75 | - | 48.25 | 48.25 | - | 48.25 |
| o IM | 7.5 | 7.5 | 7.5 | 7.5 | 7.5 | 7.5 | 7.5 | 7.5 | 7.5 |
| o Processing | 2 | 2 | 2 | 2 | 2 | 2 | 2 | 2 | 2 |
| o FOS | - | - | 1.25 | 1.25 | 1.25 | 1.25 | 1.25 | 1.25 | 1.25 |
| o $TiO_2$ | 0.5 | 0.5 | 0.5 | 0.5 | 0.5 | 0.5 | 0.5 | 0.5 | 0.5 |
| o Ultramarine blue 1 | - | - | - | - | 3.5 | 3.5 | - | - | - |
| o Ultramarine blue 2 | - | - | - | - | - | - | 3.5 | - | - |
| o Ultramarine blue 3 | - | - | - | - | - | - | - | 3.5 | 3.5 |
| Properties | | | | | | | | | |
| o Vicat B(° C) | 80 | 80 | 115 | 115 | 91 | 82 | 82 | 112 | 104 |
| o Splay* | + | + | - | - | + | + | + | - | - |

* - no or slight splay; + strong splay

It will be obvious from the results recorded in Table I that the presence of ultramarine blue which has not been tre-treated according to the invention (comparative examples E, F and G) results in a reduction of the stability (see comparative examples C and D). The stabiliser present in comparative examples E, F and G is in that case sufficiently active. Washing the ultramarine blue with hydrochloric acid (comparative example G) provides no improvement.

A clearly noticeable improvement is obtained in the examples I and II according to the invention. This is to be ascribed to the pre-treatment of the pigment.

## Claims

1. A polymer mixture which comprises the following constituents:
A. 1-98.9% by weight of an aromatic polycarbonate,
B. 98.9-1% by weight of an aromatic polyester, and
C. 0.1-8% by weight of a pigment
characterised in that the polymer mixture comprises a pigment which has been pre-treated with a solution of an agent which is capable of forming a complex or chelate with metal ions.

2. A polymer mixture as claimed in Claim 1, characterised in that it comprises a pre-treated ultramarine blue pigment.

3. A polymer mixture as claimed in Claim 1, characterised in that the polymer mixture comprises an ultramarine blue pigment which has been pre-treated with an aqueous solution of ethylenediaminotetracetic acid or a salt thereof.

4. A polymer mixture as claimed in Claim 1, characterised in that the polymer mixture moreover comprises a stabiliser.

5. A polymer mixture as claimed in Claim 4, characterised that the polymer mixture comprises a phosphorus-containing stabiliser known per se.

6. A polymer mixture as claimed in Claim 5, characterised in that the polymer mixture moreover comprises elementary sulphur.

7. A polymer mixture as claimed in Claim 4, characterised in that the polymer mixture comprises as a stabiliser a metal sulphate, sulphuric acid, sulphurous acid, a metal sulphite, a metal bisulphite, a metal hydrogen sulphate or a metal thiosulphate.

8. A polymer mixture as claimed in Claim 1, characterised in that the polymer mixture moreover comprises an agent to improve the impact strength.

9. A polymer mixture as claimed in Claim 1, characterised in that the polymer mixture moreover comprises one or more conventional additives.

10. A pigment treated with a solution of an agent which is capable of forming a complex or chelate with metal ions.

11. Articles formed from the polymer mixture as claimed in Claim 1.

European Patent Office

# EUROPEAN SEARCH REPORT

Application Number

EP 88 20 0910

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 10, no. 339 (C-385)[2395], 15th November 1986, page 149 C 385; & JP-A-61 145 247 (NIPPON ZEON CO., LTD) 02-07-1986<br>* Abstract *<br>--- | 1,2 | C 08 K 9/04<br>C 08 L 69/00<br>C 08 L 67/02 |
| A | US-A-4 599 114 (ATKINSON)<br>* Claims 1-32 *<br>--- | 1-3 | |
| A | GB-A- 951 818 (KUNOSHIMA KAGAKU KOGYO K.K.)<br>* Claims 1-8; page 2, left-hand column, lines 51-60 *<br>--- | 1-5 | |
| A | DE-A-2 631 755 (GENERAL ELECTRIC CO.)<br>* Claims 1-10 *<br>--- | 1,7 | |
| A | FR-A-2 279 816 (BAYER)<br>* Claims 1-6 *<br>----- | 1,6 | |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 21-09-1988 | DECOCKER L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)